(19) Europäisches Patentamt / European Patent Office / Office européen des brevets

(11) **EP 4 442 743 A1**

(12) **EUROPEAN PATENT APPLICATION**
published in accordance with Art. 153(4) EPC

(43) Date of publication:
**09.10.2024 Bulletin 2024/41**

(21) Application number: **22898569.3**

(22) Date of filing: **22.11.2022**

(51) International Patent Classification (IPC):
**C08J 5/24** (2006.01)

(52) Cooperative Patent Classification (CPC):
**C08J 5/24**

(86) International application number:
**PCT/JP2022/043166**

(87) International publication number:
**WO 2023/095786 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 JP 2021192793**

(71) Applicant: **Toray Industries, Inc.
Tokyo 103-8666 (JP)**

(72) Inventors:
• **KAWAHARA, Kota**
**Iyo-gun, Ehime 791-3193 (JP)**
• **MATSUTANI, Hiroaki**
**Iyo-gun, Ehime 791-3193 (JP)**
• **HONMA, Masato**
**Iyo-gun, Ehime 791-3193 (JP)**

(74) Representative: **Kador & Partner Part mbB
Corneliusstraße 15
80469 München (DE)**

(54) **PREPREG, PREFORM, AND FIBER-REINFORCED RESIN MOLDED ARTICLE**

(57)    Provided is a prepreg in which 5 to 65 parts by weight of a fiber sheet substrate is impregnated with 35 to 95 parts by weight of a resin, the fiber sheet substrate containing more than 50% by weight but 99% by weight or less of discontinuous carbon fibers (A) and 1% by weight or more but less than 50% by weight of discontinuous organic fibers (B) that are uniformly dispersed, wherein the prepreg satisfies any one of the following Conditions 1 to 3: Condition 1: the resin is a thermoplastic resin (C), and a difference between a melting point Tmb (°C) of the organic fibers (B) and a melting point Tmc (°C) of the thermoplastic resin (C) (Tmb - Tmc) is 20 to 200°C; Condition 2: the resin is a thermosetting resin (D), and a difference between the melting point Tmb (°C) of the organic fibers (B) and a curing temperature Tmd (°C) of the thermosetting resin (D) (Tmb - Tmd) is 20 to 400°C; and Condition 3: the organic fibers (B) have no melting point. A prepreg, a preform, and a fiber-reinforced plastic molded article, which have excellent moldability, mechanical properties, and impact strength, are provided.

[Fig. 1]

EP 4 442 743 A1

**Description**

Technical Field

The present invention relates to a prepreg, a preform, and a fiber-reinforced plastic molded article.

Background Art

In recent years, fiber-reinforced plastics excellent in lightweightness and strength are utilized in a variety of industrial applications. In addition, as materials using discontinuous reinforcing fibers, compression molding materials such as sheet molding compounds (SMC) as well as injection materials such as pellets have been actively developed since these materials have favorable complex shape formability and productivity.

Further, as other forms of discontinuous fiber-reinforced plastic, there is a fiber-reinforced plastic in which reinforcing fibers dispersed in the form of monofilaments are adhered with each other by a resin at a large number of contact points, and a porous fiber-reinforced plastic in which reinforcing fibers serve as a support and voids are formed (Patent Literature 1 and 2). These fiber-reinforced plastics have excellent moldability and mechanical properties depending on the dispersion state and the porous structure of the reinforcing fibers.

Citation List

Patent Literature

[Patent Literature 1] JP 2014-4775
[Patent Literature 2] WO 2017/110528

Summary of Invention

Technical Problem

However, the fiber-reinforced plastics of Patent Literature 1 and 2 have a problem in that, although they have excellent mechanical properties, they are broken at impact and thus do not have a sufficient impact strength.

The present invention was made in view of the above-described problem, and an object of the present invention is to provide a fiber-reinforced plastic having excellent moldability, mechanical properties, and impact strength.

Solution to Problem

The present invention for solving the above-described problem has the following constitution.

[1] A prepreg, in which 5 to 65 parts by weight of a fiber sheet substrate is impregnated with 35 to 95 parts by weight of a resin, the fiber sheet substrate containing more than 50% by weight but 99% by weight or less of discontinuous carbon fibers (A) and 1% by weight or more but less than 50% by weight of discontinuous organic fibers (B) that are uniformly dispersed,
wherein the prepreg satisfies any one of the following Conditions 1 to 3:

Condition 1: the resin is a thermoplastic resin (C), and a difference between a melting point Tmb (°C) of the organic fibers (B) and a melting point Tmc (°C) of the thermoplastic resin (C) (Tmb - Tmc) is 20 to 200°C;
Condition 2: the resin is a thermosetting resin (D), and a difference between the melting point Tmb (°C) of the organic fibers (B) and a curing temperature Tmd (°C) of the thermosetting resin (D) (Tmb - Tmd) is 20 to 400°C; and
Condition 3: the organic fibers (B) have no melting point.

[2] The prepreg according to [1], which expands at an average expansion ratio of 250 to 800% in an out-of-plane direction when the resin is softened.
[3] The prepreg according to [1] or [2], wherein the fiber sheet substrate has an area weight of 10 to 200 g/m$^2$.
[4] The prepreg according to any one of [1] to [3], wherein a coefficient of variation (CV) of the area weight is 0.1 to 10%.
[5] The prepreg according to any one of [1] to [4], wherein the fiber sheet substrate further contains 0.1 to 10% by weight of a binder resin (E).

[6] The prepreg according to any one of [1] to [5], wherein the fiber sheet substrate is a paper-made substrate.

[7] The prepreg according to any one of [1] to [6], wherein, in the fiber sheet substrate, a content ratio of the discontinuous carbon fibers (A) is 60 to 80% by weight, and a content ratio of the discontinuous organic fibers (B) is 20 to 40% by weight.

[8] The prepreg according to any one of [1] to [7], wherein the carbon fibers (A) have an average fiber length of 1 to 15 mm.

[9] The prepreg according to any one of [1] to [8], wherein the organic fibers (B) have an average fiber length of 4 to 20 mm.

[10] The prepreg according to any one of [1] to [9], wherein the organic fibers (B) are fibers formed of a resin selected from polyester resins, polyaryl ether ketone resins, aromatic polyamide resins, and polyarylene sulfide resins.

[11] The prepreg according to any one of [1] to [10], wherein the organic fibers (B) have a diameter of 15 to 50 $\mu$m.

[12] The prepreg according to any one of [1] to [11], wherein the organic fibers (B) have a tensile strength of 1 to 6 GPa.

[13] The prepreg according to any one of [1] to [12], wherein the organic fibers (B) have a tensile elongation at break of 2.5 to 100%.

[14] The prepreg according to any one of [1] to [13], wherein, in Condition 1, the difference between the melting point Tmb (°C) of the organic fibers (B) and the melting point Tmc (°C) of the thermoplastic resin (C) (Tmb - Tmc) is 50 to 160°C.

[15] The prepreg according to any one of [1] to [14], wherein, in Condition 1, the thermoplastic resin (C) is selected from polyolefin resins, polyamide resins, and polyarylene sulfide resins.

[16] The prepreg according to any one of [1] to [15], having a resin impregnation rate of 80 to 100%.

[17] The prepreg according to any one of [1] to [16], wherein a ratio between a maximum value $\sigma_{Max}$ and a minimum value $\sigma_{Min}$ of the tensile strength of the prepreg ($\sigma_{Max}$/minimum value $\sigma_{Min}$) is 1 to 2.

[18] A preform, obtained by laminating at least one prepreg according to any one of [1] to [17].

[19] A fiber-reinforced plastic molded article, obtained by molding the preform according to [18].

Advantageous Effects of Invention

According to the present invention, a prepreg, a preform, and a fiber-reinforced plastic molded article, which have excellent moldability, mechanical properties, and impact strength, can be obtained.

Brief Description of the Drawings

[FIG. 1] FIG. 1 is a schematic drawing that illustrates a cross-sectional structure of the prepreg of the present invention.

[FIG. 2] FIG. 2 is a schematic drawing that illustrates a cross-sectional structure of the fiber-reinforced plastic molded article of the present invention. Description of Embodiments

In order to facilitate understanding, the present invention will now be described referring to the drawings as appropriate; however, the present invention is not limited by the drawings.

The prepreg of the present invention contains discontinuous carbon fibers (A), discontinuous organic fibers (B), and a resin. Hereinafter, the carbon fibers (A) and the organic fibers (B) that are contained in the prepreg are collectively referred to as "reinforcing fibers", or simply referred to as "fibers". Examples of the resin impregnated into a fiber sheet substrate include thermoplastic resins and thermosetting resins. In the present invention, a thermoplastic resin and a thermosetting resin may be blended and, in such a case, a resin accounting for more than 50% by weight of components constituting the resin is defined as the resin impregnated into the fiber sheet substrate. For example, when the resin accounting for more than 50% by weight of components constituting the resin is a thermoplastic resin, the resin impregnated into the fiber sheet substrate is referred to as "thermoplastic resin".

The prepreg of the present invention can be used not only as a structural material itself, but also as a base material for molding a fiber-reinforced plastic molded article. Therefore, in the present specification, when the mechanical properties of the prepreg are mentioned, the mechanical properties of a fiber-reinforced plastic molded article using the prepreg may be mentioned at the same time.

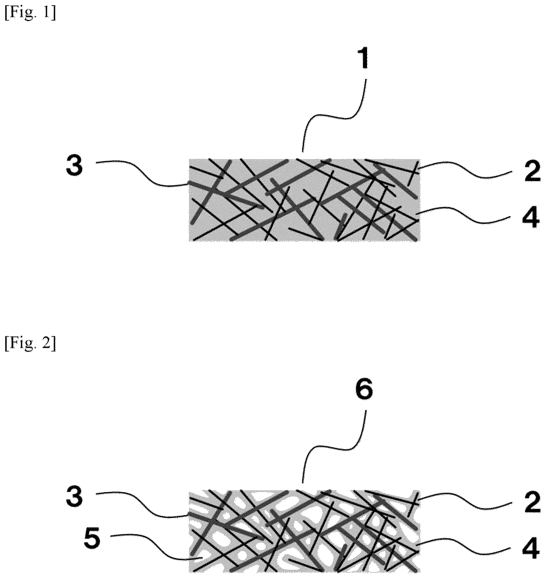

FIG. 1 is a schematic drawing that illustrates a cross-sectional structure of one form of the prepreg of the present invention. As illustrated in FIG. 1, the prepreg of the present invention contains carbon fibers 2, organic fibers 3, and a resin 4.

The prepreg of the present aspect includes 5 to 65 parts by weight of a fiber sheet substrate impregnated with 35 to 95 parts by weight of a resin, in which the fiber sheet substrate contains more than 50% by weight but 99% by weight or less of discontinuous carbon fibers (A) and 1% by weight or more but less than 50% by weight of discontinuous organic fibers (B) that are uniformly dispersed. The carbon fibers (A) have excellent rigidity and strength and, by incorporating more than 50% by weight but 99% by weight or less of the carbon fibers (A) into the fiber sheet substrate, a reinforcing effect attributed to the carbon fibers (A) can be obtained sufficiently, so that excellent rigidity and strength can be provided. The organic fibers (B) have relatively excellent durability and are less likely to be broken by an impact as compared to the carbon fibers (A). Accordingly, breakage of the prepreg containing the organic fibers (B) by an impact needs to involve fracture of the resin by the organic fibers (B) or withdrawal of the organic fibers (B) from the resin; therefore, the prepreg can be provided with excellent impact strength. When the content ratio of the organic fibers (B) in the fiber sheet substrate is 1% by weight or more, a reinforcing effect attributed to the organic fibers (B) can be obtained sufficiently, so that excellent impact strength can be provided. When the content ratio of the organic fibers (B) is less than 50% by weight, since the content ratio of the carbon fibers (A) with respect to the organic fibers (B) is relatively high, excellent rigidity and strength provided by the carbon fibers (A) as well as excellent impact strength provided by the organic fibers (B) can be obtained at the same time.

In the fiber sheet substrate, the content ratio of the carbon fibers (A) is preferably 60 to 80% by weight, and the content ratio of the organic fibers (B) is preferably 20 to 40% by weight. When the content ratio of the organic fibers (B) in the fiber sheet substrate is 20% by weight or more, the prepreg can be provided with superior impact strength. Meanwhile, when the content ratio of the organic fibers (B) is 40% by weight or less, excellent expandability of the prepreg can be maintained, so that the prepreg can be provided with excellent moldability.

When the reinforcing fibers are uniformly dispersed, the reinforcing fibers have a large number of contact points and can form a network structure. By this, a load applied to the prepreg is dispersed through the resin and the contact points, allowing the carbon fibers (A) to bear the load and thereby the prepreg exhibits excellent mechanical properties. Further, since breakage of the prepreg by an impact needs to involve fracture of the resin by the organic fibers (B) or withdrawal of the organic fibers (B) from the resin at the large number of contact points, the prepreg can exhibit excellent impact strength. Moreover, by impregnating the resin into the fiber sheet substrate in which the carbon fibers (A) and the organic fibers (B) are dispersed, a reinforcing effect exerted by these reinforcing fibers can be obtained sufficiently.

Examples of the carbon fibers (A) include PAN-based, rayon-based, lignin-based, and pitch-based carbon fibers. These fibers may be subjected to a surface treatment. Examples of the surface treatment include a treatment with a coupling agent, a treatment with a sizing agent, a treatment with a binder, and an additive adhesion treatment, in addition to a treatment of depositing a metal as a conductor. These fibers may be used singly, or in combination of two or more kinds thereof. Inorganic fibers, such as metal fibers of aluminum, brass, stainless steel, or the like, graphite fibers, glass fibers, silicon carbide fibers, or silicon nitride fibers may be used in combination as well. Among the above-described fibers, from the standpoint of weight reduction effect, PAN-based, pitch-based, or rayon-based carbon fibers excellent in specific strength and specific rigidity are preferably used. Further, from the standpoint of the balance between mechanical properties and economic efficiency, carbon fibers and glass fibers are preferably used in combination. From the standpoint of improving the conductivity, carbon fibers coated with a metal, such as nickel, copper, or ytterbium, can be used. Thereamong, PAN-based carbon fibers having excellent mechanical properties, such as strength and elastic modulus, can be used more preferably.

Examples of the organic fibers (B) include fibers obtained by spinning a resin, for example, a polyolefin resin such as polyethylene or polypropylene, a polyamide resin such as nylon 6, nylon 66, or an aromatic polyamide, a polyester resin such as polyethylene terephthalate, polybutylene terephthalate, or liquid-crystal polyester, a polyaryl ether ketone resin such as polyether ketone, a polyether sulfone, a polyarylene sulfide, or a fluororesin. Two or more kinds of these fibers may be used in combination. Thereamong, from the standpoint of inhibiting fiber breakage at impact, the organic fibers (B) of the present invention are preferably selected from fibers of a polyester resin, an aromatic polyamide resin, a polyaryl ether ketone resin, and a polyarylene sulfide resin.

In the present invention, the carbon fibers (A) preferably have an average fiber length of 1 to 15 mm. When the average fiber length of the carbon fibers (A) is 1 mm or more, a reinforcing effect exerted by the carbon fibers (A) can be obtained sufficiently, so that the prepreg can be provided with excellent mechanical properties. Meanwhile, when the average fiber length of the carbon fibers (A) is 15 mm or less, the carbon fibers (A) are unlikely to be bent in the prepreg and, by being discontinuous fibers, the prepreg can exhibit excellent moldability while maintaining high mechanical properties. The average fiber length of the carbon fibers (A) is more preferably 2 to 13 mm.

Further, the organic fibers (B) preferably have an average fiber length of 4 to 20 mm. When the average fiber length of the organic fibers (B) is 4 mm or more, the organic fibers (B) have a large number of contact points with other fibers and the resin and, since an impact thereto involves fracture of the resin or withdrawal of organic fibers (B) from the resin at many points, excellent impact strength can be exerted. Meanwhile, when the average fiber length of the organic fibers (B) is 20 mm or less, the organic fibers (B) do not cause deterioration of the dispersibility, so that a uniform prepreg can be obtained. The average fiber length of the organic fibers (B) is more preferably 6 to 15 mm.

The average fiber length of the reinforcing fibers can be determined by removing the resin component by a method such as burning or elution, randomly selecting 400 fibers from the remained reinforcing fibers, measuring the length of the selected fibers in the order of 100 μm, and then calculating the average length of the fibers.

In the present invention, the organic fibers (B) preferably have a diameter of 15 to 50 μm. In the prepreg of the present invention, since the discontinuous organic fibers (B) are uniformly dispersed, the organic fibers existing in the form of monofilaments, not in the form of fiber bundles, bear a load. Therefore, when the diameter of the organic fibers (B) is 15 μm or more, the withstanding load of the organic fibers (B) sufficiently increases with an increase in the cross-sectional area, and breakage of the organic fiber monofilaments by a load at impact can be sufficiently inhibited, so that the prepreg can be provided with excellent impact strength. When the diameter of the organic fibers (B) is 50 μm or less, the number of the organic fibers (B) per unit volume can be sufficiently increased and, since an impact thereto involves fracture of the resin or withdrawal of organic fibers (B) from the resin at many points, so that the prepreg can be provided with excellent impact strength.

In the present invention, the organic fibers (B) preferably have a tensile strength of 1 to 6 GPa. By controlling the tensile strength to be in this range, breakage of the organic fibers (B) at impact can be sufficiently inhibited, so that the prepreg can be provided with excellent impact strength.

In the present invention, the organic fibers (B) preferably have a tensile elongation at break of 2.5 to 100%. When the tensile elongation at break is 2.5% or more, breakage of the organic fibers (B) at impact can be sufficiently inhibited, so that excellent impact strength can be provided. When the tensile elongation at break is 100% or less, elongation of the organic fibers (B) at impact is inhibited and the organic fibers (B) can bear a sufficient amount of load, so that excellent impact strength can be provided. The tensile elongation at break of the organic fibers (B) is preferably 2.5 to 30%, more preferably 2.5 to 15%. The tensile elongation at break (%) of the organic fibers (B) can be determined by the following method. A tensile test of a single organic fiber is conducted in a room under standard conditions (20°C and 65% RH) at a chuck distance of 250 mm and a tensile speed of 300 mm/min, and the length of the fiber at break is measured (note that breakage of the fiber in the vicinity of a chuck is regarded as chucking breakage and excluded from data), after which calculation is performed to two decimal places using the following equation, and the thus calculated value is rounded off to the nearest tenth. An average value of three measurements (number of data: n = 3) is defined as the tensile elongation at break.

$$\text{Tensile elongation at break (\%)} = [(\text{Length at break (mm)} - 250)/250] \times 100$$

In the prepreg of the present invention, when the content of the fiber sheet substrate is 5 parts by weight or more and that of the resin is 95 parts by weight or less, a reinforcing effect attributed to the reinforcing fibers can be obtained sufficiently, so that the prepreg can exhibit excellent mechanical properties. Meanwhile, when the content of the fiber sheet substrate is 65 parts by weight or less and that of the resin is 35 parts by weight or more, the reinforcing fibers are sufficiently adhered with each other by the resin, so that a reinforcing effect of the reinforcing fibers can be obtained sufficiently. In the prepreg of the present invention, the fiber sheet substrate is impregnated with the resin, and the impregnation rate is preferably 80 to 100%. In this range, the prepreg of the present invention can be used without impairing the moldability and the mechanical properties of the prepreg, which is an effect of the present invention.

Further, the prepreg of the present invention satisfies any one of the following Conditions 1 to 3:

Condition 1: the resin is a thermoplastic resin (C), and a difference between a melting point Tmb (°C) of the organic fibers (B) and a melting point Tmc (°C) of the thermoplastic resin (C) (Tmb - Tmc) is 20 to 200°C;
Condition 2: the resin is a thermosetting resin (D), and a difference between the melting point Tmb (°C) of the organic fibers (B) and a curing temperature Tmd (°C) of the thermosetting resin (D) (Tmb - Tmd) is 20 to 400°C; and
Condition 3: the organic fibers (B) have no melting point.

In Condition 1, i.e. when the resin is a thermoplastic resin (C), by controlling the value of (Tmb - Tmc) to be 20 to 200°C, the thermoplastic resin (C) can be softened without melting the organic fibers (B) at the time of resin impregnation, so that a prepreg in which the organic fibers (B) remain in the state of fibers in the thermoplastic resin (C) can be obtained. The organic fibers (B) are unlikely to be broken, and breakage of a fiber-reinforced plastic by an impact thus needs to involve fracture of the thermoplastic resin by the organic fibers (B) or withdrawal of the organic fibers (B) from the thermoplastic resin at contact points of fibers. Accordingly, by allowing the organic fibers (B) to remain in the state of fibers, excellent impact strength can be provided. The value of (Tmb - Tmc) is preferably 30 to 180°C, more preferably 50 to 160°C. This allows the thermoplastic resin (C) to be sufficiently softened within a temperature range in which the organic fibers (B) are not melted at the time of molding; therefore, a prepreg having excellent impact strength can be obtained without impairing the productivity and the formability.

In Condition 2, i.e. when the resin is a thermosetting resin (D), by controlling the value of (Tmb - Tmd) to be 20 to 400°C, the thermosetting resin (D) can be softened and then cured without melting the organic fibers (B) at the time of resin impregnation, so that a prepreg in which the organic fibers (B) remain in the state of fibers in the thermosetting resin (D) can be obtained, and this prepreg can be provided with excellent impact strength. The value of (Tmb - Tmd) is preferably 30 to 380°C, more preferably 50 to 350°C. This allows the thermosetting resin (D) to be sufficiently softened and cured within a temperature range in which the organic fibers (B) are not melted at the time of molding; therefore, a prepreg having excellent impact strength can be obtained without impairing the productivity and the formability.

In Condition 3, i.e. when the organic fibers (B) have no melting point, the organic fibers (B) are not melted at the time of molding, so that a prepreg in which the organic fibers (B) remain in the state of fibers in the resin can be obtained, and this prepreg can be provided with excellent impact strength. Examples of the organic fibers (B) having no melting point include aramid fibers.

The thermoplastic resin (C) is, for example, a thermoplastic resin selected from: crystalline resins, including "polyesters, such as polyethylene terephthalate (PET), polybutylene terephthalate (PBT), polytrimethylene terephthalate (PTT), polyethylene naphthalate (PEN), and liquid crystal polyester; polyolefins, such as polyethylene (PE), polypropylene (PP), and polybutylene; polyoxymethylene (POM); polyamide (PA); polyarylene sulfides such as polyphenylene sulfide (PPS); polyketone (PK); polyether ketone (PEK); polyether ether ketone (PEEK); polyether ketone ketone (PEKK); polyether nitrile (PEN); fluororesins such as polytetrafluoroethylene; and liquid crystal polymers (LCP)"; amorphous resins, including "styrene-based resins, polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, and polyarylate (PAR)"; phenolic resins; phenoxy resins; polystyrene-based, polyolefin-based, polyurethane-based, polyester-based, polyamide-based, polybutadiene-based, polyisoprene-based, fluororesin-based, and acrylonitrile-based thermoplastic elastomers; and copolymers and modified products of these resins. Thereamong, an amorphous resin such as a polycarbonate or a styrene-based resin is preferably used from the standpoint of surface appearance, a polyether ether ketone is preferably used from the standpoint of continuous use temperature, and a fluororesin is preferably used from the standpoint of chemical resistance. In the prepreg of the present invention, the thermoplastic resin (C) in Condition 1 is preferably selected from polyolefin resins, polyamide resins, and polyarylene sulfide resins. Specifically, a polyolefin is preferably used from the standpoint of lightweightness, a polyamide is preferably used from the standpoint of strength, and a polyarylene sulfide is preferably used from the standpoint of heat resistance.

Examples of the thermosetting resin (D) include unsaturated polyester resins, vinyl ester resins, epoxy resins, phenolic resins, acrylic resins, urea resins, melamine resins, and thermosetting polyimide resins, as well as copolymers, modified products, and blends of these resins.

The resin may also contain an impact resistance improver, such as an elastomer or a rubber component, as well as other filler(s) and additive(s) within a range that does not adversely affect the object of the present invention. Examples of the fillers and additives include inorganic fillers, flame retardants, conductivity imparting agents, nucleating agents, UV absorbers, antioxidants, damping agents, antibacterial agents, insect repellents, deodorants, color inhibitors, heat stabilizers, release agents, antistatic agents, plasticizers, lubricants, colorants, pigments, dyes, blowing agents, foam control agents, and coupling agents.

In the prepreg of the present invention, when the resin is softened, the resilience of the fibers in the fiber sheet substrate causes a spring-back phenomenon. In other words, the prepreg is expandable in an out-of-plane direction. The prepreg of the present invention preferably expands at an average expansion ratio of 250 to 800% in an out-of-plane direction when the resin is softened. When the average expansion ratio is 250% or more, a fiber-reinforced plastic molded article obtained after expansion can contain a sufficient amount of voids and thus be provided with excellent lightweightness. Meanwhile, when the average expansion ratio is 800% or less, a fiber-reinforced plastic molded article obtained after expansion can be provided with sufficient mechanical properties. It is noted here that the average expansion ratio is an arithmetic mean value of the expansion ratio measured at randomly selected five spots, which can be calculated by (Thickness [mm] of fiber-reinforced plastic molded article after expansion)/(Thickness [mm] of prepreg before expansion) $\times$ 100 [%]. The phrase "when the resin is softened" used herein means: when the resin is a thermoplastic resin (C), a time when the prepreg is heated for 5 minutes at a temperature that is higher than the melting point of the thermoplastic resin (C) by 20°C; or when the resin is a thermosetting resin (D), a time when the prepreg is heated for 1 minute at a temperature that is lower than the curing temperature of the thermosetting resin (D) by 30°C.

The fiber sheet substrate of the present invention preferably has an area weight of 10 to 200 g/m². When the area weight is 10 g/m² or more, breakage of the fiber sheet substrate during handling or resin impregnation is inhibited, so that a prepreg having excellent moldability and mechanical properties can be obtained. Meanwhile, when the area weight is 200 g/m² or less, resin impregnation can be easily performed, and a prepreg having excellent moldability and mechanical properties can be obtained. Further, the coefficient of variation (CV) of the area weight, which indicates a variation in the area weight of the fiber sheet substrate, is preferably 0.1 to 10%. In the production process of the fiber sheet substrate, a coefficient of variation (CV) of the area weight of 0.1% or more can actually occur. A coefficient of variation (CV) of the area weight that is less than 0.1% means that the average value of the area weight is very large, and that the area weight hardly shows a fluctuation. When the coefficient of variation (CV) of the area weight is 0.1% or more, the average value of the area weight is prevented from being excessively large, so that a prepreg that can be easily impregnated with a resin and has excellent moldability and mechanical properties can be obtained. Meanwhile, a coefficient of variation (CV) of the area weight that is 10% or less means that the carbon fibers (A) and the organic fibers (B) are dispersed in a sufficiently uniform state. A part containing a relatively small amount of the carbon fibers (A) is a fragile part in terms of strength and rigidity, and a part containing a relatively small amount of the organic fibers (B) is a fragile part in terms of impact strength, where fiber breakage is likely to occur. Therefore, when the carbon fibers (A) and the organic fibers (B) are uniformly dispersed, the prepreg can attain both excellent mechanical properties and excellent impact strength without such local fragile parts. The coefficient of variation of the area weight is calculated by the following equation from the area weight $w_i$ (i = 1 to 5) of each of five 1 cm-square pieces of the fiber sheet substrate and an average value W thereof.

$$W = \frac{1}{5}\sum_{i=1}^{5} w_i$$

$$\text{Coefficient of variation} \ (\%) \ = \frac{100}{W}\sqrt{\frac{1}{5}\sum_{i=1}^{5}(w_i - W)^2}$$

The fiber sheet substrate of the present invention preferably contains 0.1 to 10% by weight of a binder resin (E). By incorporating the binder resin (E) in an amount of 0.1% by weight or more, the fibers in the fiber sheet substrate can be sufficiently bound with each other, and breakage of the fiber sheet substrate during handling or resin impregnation is thus inhibited, so that the prepreg can be provided with excellent moldability and mechanical properties. By incorporating the binder resin (E) in an amount of 10% by weight or less, the weight content of the binder resin (E) is made relatively small with respect to the reinforcing fibers, so that the prepreg can attain both excellent lightweightness and excellent mechanical properties.

The fiber sheet substrate of the present invention is preferably a paper-made substrate. When the fiber sheet substrate is a paper-made substrate obtained by dispersion of the fibers in water and subsequent paper-making, the carbon fibers (A) and the organic fibers (B) can be uniformly mixed and dispersed, so that the prepreg can attain both excellent mechanical properties and excellent impact strength without local fragile parts.

In the prepreg of the present invention, a ratio between a maximum value $\sigma_{Max}$ and a minimum value $\sigma_{Min}$ of the tensile strength ($\sigma_{Max}$/minimum value $\sigma_{Min}$) is preferably 1 to 2. A tensile strength ratio of 2 or lower means that the prepreg has a high isotropy of the tensile strength, and this can inhibit the propagation of a crack in a fragile direction at impact, so that the prepreg can be provided with excellent impact strength.

The tensile strength of the prepreg is determined by cutting out test pieces from the prepreg, and measuring the tensile characteristics thereof in accordance with the ISO527-3 method (1995). The test pieces are measured in four directions: an arbitrary direction defined as 0°; +45°; -45°; and 90°. For each direction, the number of measurements is 5 or more (n = 5 or more), and an average value of all measurements is defined as the tensile strength. Among the thus determined tensile strength values for the respective measurement directions, a maximum value and a minimum value are defined as $\sigma_{Max}$ and $\sigma_{Min}$, respectively.

The prepreg of the present invention can be used as a preform. The term "preform" used herein refers to a material obtained by laminating at least one prepreg of the present invention, and a form of the preform is not particularly limited. Examples of a means for producing the preform include a method of laminating the prepreg before a preheating treatment of the prepreg, and a method of laminating the prepreg after a preheating treatment of the prepreg. The preheating treatment refers to a step of heating the prepreg to a temperature of not lower than its melting point or softening point at the time of molding the prepreg. In other words, "laminating the prepreg after a heating treatment of the prepreg" means to heat the whole or a part of each prepreg individually and then laminate the prepreg at a temperature of not lower than its melting point or softening point, and a laminate obtained by this process also corresponds to the preform of the present invention. It is noted here that the laminated amount and the size of the preform can be adjusted as appropriate in accordance with the shape of the desired molded article.

Another aspect of the present invention is a fiber-reinforced plastic molded article obtained by molding the preform of the present invention.

The fiber-reinforced plastic molded article of the present invention can be typically produced by heat-molding the preform of the present invention.

FIG. 2 is a schematic drawing that illustrates a cross-sectional structure of one form of the fiber-reinforced plastic molded article of the present invention. As illustrated in FIG. 2, a form 6 of the fiber-reinforced plastic molded article of the present invention includes voids 5 in addition to carbon fibers 2, organic fibers 3, and a resin 4.

Examples of a heat molding method for obtaining the fiber-reinforced plastic molded article of the present invention include autoclave molding, compression molding, and oven molding. Other materials may be used in combination to form a portion of a member. By being molded from the preform of the present invention, the fiber-reinforced plastic molded article of the present invention can exhibit excellent mechanical properties and impact strength.

Examples

The present invention will now be described in more detail by way of Examples; however, the scope of the present invention is not limited to the below-described Examples.

(1) Measurement of Weight Content of Fiber Sheet Substrate and Resin in Prepreg

A prepreg was produced by laminating a resin sheet and a fiber mat. The weight content rate of the fiber sheet substrate and the weight content of a resin in the thus obtained prepreg were calculated by the following equations from the area weight Wr $(g/m^2)$ and the number of lamination Nr of the resin sheet, the area weight Wf $(g/m^2)$ of carbon fibers and the area weight Wo $(g/m^2)$ of organic fibers in the fiber mat, and the number of lamination Nm of the fiber mat.

Weight content (parts by weight) of fiber sheet substrate = {(Wf × Nm) + (Wo × Nm)}/{(Wf × Nm) + (Wo × Nm) + (Wr × Nr)} × 100 Weight content (parts by weight) of resin = (Wr × Nr)/{(Wf × Nm) + (Wo × Nm) + (Wr × Nr)} × 100

(2) Measurement of Density ρ of Prepreg

A test piece was cut out from a prepreg, and the apparent density of the prepreg was determined referring to JIS K 7222 (2005). The dimensions of the test piece were 100 mm in length and 100 mm in width. The length, the width, and the thickness of the test piece were measured using a micrometer and, from the thus obtained values, the volume V $(mm^3)$ of the test piece was calculated. Further, the mass M (g) of the cut-out test piece was measured using an electronic balance. The thus obtained mass M and volume V were substituted into the following equation to calculate the density ρ of the prepreg.

$$\rho \ (g/cm^3) = 10^3 \times M/V$$

(3) Charpy Impact Test of Fiber-Reinforced Plastic Molded Article

A test piece was cut out from a fiber-reinforced plastic molded article, and the Charpy impact strength of the fiber-reinforced plastic molded article was measured referring to JIS K 7111 (2006). The test piece was cut out at a length of 80 ± 2 mm, a width of 10.0 ± 0.2 mm, and a thickness of 4.0 ± 0.2 mm. An edgewise impact test was conducted using an unnotched test piece. The number of measurements was 3 (n = 3), and an arithmetic mean value was defined as the impact strength.

(4) Bending Test of Prepreg

A test piece was cut out from a prepreg, and the flexural strength and the flexural modulus were determined in accordance with the ISO178 method (1993). The test piece was cut out in four directions: an arbitrary direction defined as 0°; +45°; -45°; and 90°. For each direction, the number of measurements was 3 (n = 3), and arithmetic mean values were defined as the flexural strength and the flexural modulus.

[Average Expansion Ratio of Prepreg in Out-of-Plane Direction]

The expansion ratio of a prepreg in an out-of-plane direction was calculated by the following equation from the thickness of the prepreg before expansion (before heating) and the thickness of a porous structure obtained after softening of a resin and resulting expansion. The term "softening of a resin" means: when the resin is a thermoplastic resin (C), to heat the prepreg for 5 minutes at a temperature that is higher than the melting point of the thermoplastic resin (C) by 20°C; or when the resin is a thermosetting resin (D), to heat the prepreg for 1 minute at a temperature that is lower than the curing temperature of the thermosetting resin (D) by 30°C.

(Expansion ratio of prepreg in out-of-plane direction) = (Thickness [mm] of porous structure after expansion)/(Thickness [mm] of prepreg before expansion) $\times$ 100 [%]

The average expansion ratio of a prepreg in an out-of-plane direction was determined as an arithmetic mean value of the expansion ratio of the prepreg in the out-of-plane direction that was measured at randomly selected five spots.

(5) Materials of Test Specimen

[Carbon Fibers]

A copolymer containing polyacrylonitrile as a main component was subjected to spinning, calcination treatment, and surface oxidation to obtain continuous carbon fibers having a total of 12,000 filaments. The thus obtained continuous carbon fibers had the following properties.

Monofilament diameter: 7 $\mu$m
Density: 1.8 g/cm$^3$
Tensile strength: 4,600 MPa
Tensile elastic modulus: 220 GPa
Tensile elongation at break: 2.1%

[PET Fibers 1]

Polyester fibers ("TETORON" (registered trademark) 1700T-288F-702C manufactured by Toray Industries, Inc., melting point: 260°C, fiber diameter: 23 $\mu$m, density: 1.38 g/cm$^3$, tensile elongation at break: 14%) were used.

[PET Fibers 2]

Polyester fibers ("TETORON" (registered trademark) manufactured by Toray Industries, Inc., melting point: 260°C, fiber diameter: 7 $\mu$m, density: 1.38 g/cm$^3$, tensile elongation at break: 46%) were used.

[PET Fibers 3]

Polyester fibers ("TETORON" (registered trademark) manufactured by Toray Industries, Inc., melting point: 260°C, fiber diameter: 10 $\mu$m, density: 1.38 g/cm$^3$, tensile elongation at break: 42%) were used.

[PET Fibers 4]

Polyester fibers ("TETORON" (registered trademark) manufactured by Toray Industries, Inc., melting point: 260°C, fiber diameter: 18 $\mu$m, density: 1.38 g/cm$^3$, tensile elongation at break: 36.5%) were used.

[LCP Fibers]

Liquid-crystal polyester fibers ("SIVERAS" (registered trademark) 1700T-288F manufactured by Toray Industries, Inc., melting point: 330°C, fiber diameter: 23 $\mu$m, density: 1.39 g/cm$^3$, tensile elongation at break: 2.8%) were used.

[Aramid Fiber]

Para-aramid fibers ("KEVLAR" (registered trademark) manufactured by Toray Industries, Inc., fiber diameter: 12 $\mu$m, density: 1.44 g/cm$^3$, tensile elongation at break: 3.6%) were used.

[Resin Sheet 1]

A resin sheet 1 having an area weight of 150 g/m$^2$, which was formed of 80% by mass of an unmodified polypropylene resin ("PRIME POLYPRO" (registered trademark) J105G, manufactured by Prime Polymer Co., Ltd.) and 20% by mass of an acid-modified polypropylene resin ("ADMER" (registered trademark) QB510, manufactured by Mitsui Chemicals, Inc.), was prepared. The thus obtained resin sheet 1 had a density of 0.92 g/cm$^3$ and a melting point of 165°C.

[Resin Sheet 2]

A resin sheet 2 having an area weight of 200 g/m$^2$, which was formed of 80% by mass of an unmodified polypropylene resin ("PRIME POLYPRO" (registered trademark) J105G, manufactured by Prime Polymer Co., Ltd.) and 20% by mass of an acid-modified polypropylene resin ("ADMER" (registered trademark) QB510, manufactured by Mitsui Chemicals, Inc.), was prepared. The thus obtained resin sheet 2 had a density of 0.92 g/cm$^3$ and a melting point of 165°C.

[Resin Sheet 3]

A resin sheet 3 having an area weight of 150 g/m$^2$, which was formed of a polyether ketone ketone ("KEPSTAN" (registered trademark) 6003, manufactured by Arkema), was prepared. The thus obtained resin sheet 2 had a melting point of 305°C.

[Resin Sheet 4]

A transparent viscous liquid was obtained by adding 30 parts by mass of "jER" (registered trademark) 828 (manufactured by Mitsubishi Chemical Corporation), 35 parts by mass of "jER" (registered trademark) 1001, and 35 parts by mass of "jER" (registered trademark) 154 in a kneader, heating the added materials to 150°C with kneading, and subsequently kneading the materials at 150°C for 1 hour. The thus obtained viscous liquid was cooled to 60°C with kneading, after which 3.7 parts by mass of DYCY7 (manufactured by Mitsubishi Chemical Corporation) as a hardener, 3 parts by mass of DCMU99 (manufactured by Hodogaya Chemical Co., Ltd.) as a curing accelerator, and 3 parts by mass of "MATSUMOTO MICROSPHERE" (registered trademark) M (manufactured by Matsumoto Yushi-Seiyaku Co., Ltd.) as particles were further added, and the resultant was kneaded at 60°C for 30 minutes, whereby an epoxy resin composition was prepared. A resin sheet 4 having an area weight of 150 g/m$^2$ was produced from the epoxy resin composition. The thus obtained resin sheet 4 had a curing temperature of 165°C.

[Fiber Mat 1]

The carbon fibers and the PET fibers 1 were cut at a length of 6 mm and 13 mm, respectively, to obtain chopped carbon fibers and chopped PET fibers 1. A dispersion composed of water and a surfactant (polyoxyethylene lauryl ether (trade name), manufactured by Nacalai Tesque, Inc.), which had a concentration of 0.1% by mass, was prepared, and a fiber mat was produced using this dispersion, the chopped carbon fibers, and the chopped PET fibers 1. A fiber mat production apparatus was equipped with a container having a cylinder shape of 1,000 mm in diameter and an opening cock in a lower part of the container as a dispersing vessel. A stirrer was attached to an opening on the upper surface of this dispersing vessel, enabling to load the chopped carbon fibers, the chopped PET fibers 1, and the dispersion through the opening. A paper-made substrate was dried in a 200°C drying furnace for 30 minutes to obtain a web. This web was disposed in layers to obtain a fiber mat 1. In the thus obtained fiber mat, the carbon fibers and the PET fibers 1 had an average fiber length of 6 mm and 13 mm, respectively, and the area weight of the carbon fibers and that of the PET fibers 1 were 72 g/m$^2$ and 28 g/m$^2$, respectively.

[Fiber Mat 2]

A fiber mat 2 was obtained in the same manner as the fiber mat 1, except that the PET fibers 1 in the fiber mat 1 were changed to the LCP fibers. In the thus obtained fiber mat, the carbon fibers and the LCP fibers had an average fiber length of 6 mm and 13 mm, respectively, and the area weight of the carbon fibers and that of the LCP fibers were 72 g/m$^2$ and 28 g/m$^2$, respectively.

[Fiber Mat 3]

A fiber mat 3 was obtained in the same manner as the fiber mat 1, except that the PET fibers 1 in the fiber mat 1 were changed to the PET fibers 2. In the thus obtained fiber mat, the carbon fibers and the PET fibers 2 had an average fiber length of 6 mm and 13 mm, respectively, and the area weight of the carbon fibers and that of the PET fibers 2 were 72 g/m$^2$ and 28 g/m$^2$, respectively.

[Fiber Mat 4]

A fiber mat 4 was obtained in the same manner as the fiber mat 1, except that the PET fibers 1 in the fiber mat 1 were changed to the PET fibers 3. In the thus obtained fiber mat, the carbon fibers and the PET fibers 3 had an average fiber length of 6 mm and 13 mm, respectively, and the area weight of the carbon fibers and that of the PET fibers 3 were 72 g/m$^2$ and 28 g/m$^2$, respectively.

[Fiber Mat 5]

A fiber mat 5 was obtained in the same manner as the fiber mat 1, except that the PET fibers 1 in the fiber mat 1 were changed to the PET fibers 4. In the thus obtained fiber mat, the carbon fibers and the PET fibers 4 had an average fiber length of 6 mm and 13 mm, respectively, and the area weight of the carbon fibers and that of the PET fibers 4 were 72 g/m$^2$ and 28 g/m$^2$, respectively.

[Fiber Mat 6]

A fiber mat 6 was obtained in the same manner as the fiber mat 2, except that the carbon fibers in the fiber mat 2 were cut at a length of 0.5 mm. In the thus obtained fiber mat, the carbon fibers and the LCP fibers had an average fiber length of 0.5 mm and 13 mm, respectively, and the area weight of the carbon fibers and that of the LCP fibers were 72 g/m$^2$ and 28 g/m$^2$, respectively.

[Fiber Mat 7]

A fiber mat 7 was obtained in the same manner as the fiber mat 2, except that the carbon fibers in the fiber mat 2 were cut at a length of 20 mm. In the thus obtained fiber mat, the carbon fibers and the LCP fibers had an average fiber length of 20 mm and 13 mm, respectively, and the area weight of the carbon fibers and that of the LCP fibers were 72 g/m$^2$ and 28 g/m$^2$, respectively.

[Fiber Mat 8]

A fiber mat 8 was obtained in the same manner as the fiber mat 2, except that the LCP fibers in the fiber mat 2 were cut at a length of 2 mm. In the thus obtained fiber mat, the carbon fibers and the LCP fibers had an average fiber length of 6 mm and 2 mm, respectively, and the area weight of the carbon fibers and that of the LCP fibers were 72 g/m$^2$ and 28 g/m$^2$, respectively.

[Fiber Mat 9]

A fiber mat 9 was obtained in the same manner as the fiber mat 2, except that the LCP fibers in the fiber mat 2 were cut at a length of 30 mm. In the thus obtained fiber mat, the carbon fibers and the LCP fibers had an average fiber length of 6 mm and 30 mm, respectively, and the area weight of the carbon fibers and that of the LCP fibers were 72 g/m$^2$ and 28 g/m$^2$, respectively.

[Fiber Mat 10]

A fiber mat 10 was obtained in the same manner as the fiber mat 1, except that the PET fibers 1 in the fiber mat 1 were changed to the aramid fibers. In the thus obtained fiber mat, the carbon fibers and the aramid fibers had an average fiber length of 6 mm and 13 mm, respectively, and the area weight of the carbon fibers and that of the aramid fibers were 72 g/m$^2$ and 28 g/m$^2$, respectively.

[Fiber Mat 11]

A fiber mat 11 was obtained in the same manner as the fiber mat 2, except that the chopped LCP fibers in the fiber mat 2 were in a state where a fiber bundle of an original thickness partially remained. In the thus obtained fiber mat, the carbon fibers and the LCP fibers had an average fiber length of 6 mm and 13 mm, respectively, and the area weight of the carbon fibers and that of the LCP fibers were 72 g/m$^2$ and 28 g/m$^2$, respectively.

[Fiber Mat 12]

A fiber mat 12 was obtained in the same manner as the fiber mat 2, except that the ratio of the chopped carbon fibers and the chopped LCP fibers that were loaded to the dispersing vessel was changed. In the thus obtained fiber mat, the carbon fibers and the LCP fibers had an average fiber length of 6 mm and 13 mm, respectively, and the area weight of the carbon fibers and that of the LCP fibers were 84 $g/m^2$ and 16 $g/m^2$, respectively.

[Fiber Mat 13]

A fiber mat 13 was obtained in the same manner as the fiber mat 2, except that the ratio of the chopped carbon fibers and the chopped LCP fibers that were loaded to the dispersing vessel was changed. In the thus obtained fiber mat, the carbon fibers and the LCP fibers had an average fiber length of 6 mm and 13 mm, respectively, and the area weight of the carbon fibers and that of the LCP fibers were 63 $g/m^2$ and 37 $g/m^2$, respectively.

[Fiber Mat 14]

A fiber mat 14 was obtained in the same manner as the fiber mat 2, except that the ratio of the chopped carbon fibers and the chopped LCP fibers that were loaded to the dispersing vessel was changed. In the thus obtained fiber mat, the carbon fibers and the LCP fibers had an average fiber length of 6 mm and 13 mm, respectively, and the area weight of the carbon fibers and that of the LCP fibers were 56 $g/m^2$ and 44 $g/m^2$, respectively.

[Fiber Mat 15]

A fiber mat 15 was obtained in the same manner as the fiber mat 2, except that the ratio of the chopped carbon fibers and the chopped LCP fibers that were loaded to the dispersing vessel was changed. In the thus obtained fiber mat, the carbon fibers and the LCP fibers had an average fiber length of 6 mm and 13 mm, respectively, and the area weight of the carbon fibers and that of the LCP fibers were 51 $g/m^2$ and 49 $g/m^2$, respectively.

[Fiber Mat 16]

A fiber mat 16 was obtained in the same manner as the fiber mat 2, except that the ratio of the chopped carbon fibers and the chopped LCP fibers that were loaded to the dispersing vessel was changed. In the thus obtained fiber mat, the carbon fibers and the LCP fibers had an average fiber length of 6 mm and 13 mm, respectively, and the area weight of the carbon fibers and that of the LCP fibers were 39 $g/m^2$ and 61 $g/m^2$, respectively.

[Fiber Mat 17]

The carbon fibers were cut at a length of 6 mm to obtain chopped carbon fibers. A dispersion composed of water and a surfactant (polyoxyethylene lauryl ether (trade name), manufactured by Nacalai Tesque, Inc.), which had a concentration of 0.1% by mass, was prepared, and a fiber mat was produced using this dispersion and the chopped carbon fibers. A fiber mat production apparatus was equipped with a container having a cylinder shape of 1,000 mm in diameter and an opening cock in a lower part of the container as a dispersing vessel. A stirrer was attached to an opening on the upper surface of this dispersing vessel, enabling to load the chopped carbon fibers and the dispersion through the opening. A paper-made substrate was dried in a 200°C drying furnace for 30 minutes to obtain a web. This web was disposed in layers to obtain a fiber mat 17. In the thus obtained fiber mat, the carbon fibers had an average fiber length of 6 mm and an area weight of 90 $g/m^2$.

[Fiber Mat 18]

A fiber mat 18 having an area weight of 110 $g/m^2$ was obtained in the same manner as the fiber mat 17.

(Example 1)

A laminate was produced by arranging the fiber mat 1 and the resin sheet 1 in the order of [resin sheet 1/fiber mat 1/resin sheet 1/fiber mat 1/resin sheet 1/fiber mat 1/resin sheet 1/fiber mat 1/resin sheet 1/fiber mat 1/resin sheet 1]. Subsequently, a prepreg was obtained through the following steps (A) to (C).

(A) The laminate was arranged in a cavity of a compression molding die that had been preheated to 180°C, and the die was closed.

(B) A pressure of 3 MPa was applied and maintained for 5 minutes, after which the cavity was cooled to a temperature of 50°C with the pressure being maintained.

(C) The die was opened, and the resulting prepreg was taken out.

Thereafter, a fiber-reinforced plastic molded article was obtained through the below-described steps (D) to (F). The properties of the thus obtained prepreg and fiber-reinforced plastic molded article are shown in Table 1. A higher impact strength was obtained as compared to Comparative Example 1.

(D) The prepreg was arranged in the cavity of the same compression molding die as the one used in (A), which had been preheated to 180°C, and the die was fastened and maintained for 5 minutes, after which the die was opened, and a metal spacer was inserted to an end of the die to adjust the thickness of the resulting fiber-reinforced plastic molded article to be 4.0 mm.

(E) The cavity of the die was fastened again, and the cavity was cooled to a temperature of 50°C with the pressure being maintained.

(F) The die was opened, and the resulting fiber-reinforced plastic molded article was taken out.

(Example 2)

A prepreg and a fiber-reinforced plastic molded article were obtained through the same steps as in Example 1, except that the fiber mat 1 was changed to the fiber mat 2. The properties of the thus obtained prepreg and fiber-reinforced plastic molded article are shown in Table 1. As compared to Example 1, organic fibers (B) having a higher tensile strength were used, and a particularly high impact strength was obtained.

(Example 3)

A prepreg and a fiber-reinforced plastic molded article were obtained through the same steps as in Example 1, except that the fiber mat 1 was changed to the fiber mat 2, the resin sheet 1 was changed to the resin sheet 3, the preheating temperature in the step (A) was changed to 350°C, and the pressure and the retention time in the step (B) were changed to 10 MPa and 10 minutes, respectively. The properties of the thus obtained prepreg and fiber-reinforced plastic molded article are shown in Table 1. Even when a resin having a higher melting point than the resin of Example 2 was used, a particularly high impact strength was obtained as well as Example 2.

(Example 4)

The resin sheet 1 used in Example 1 was changed to the resin sheet 4, and a prepreg was obtained through the following steps (A) to (C).

(A) A laminate was arranged in a cavity of a compression molding die that had been preheated to 60°C, and the die was closed.

(B) A pressure of 5 MPa was applied and maintained for 90 minutes.

(C) The die was opened, and the resulting prepreg was taken out.

Thereafter, a fiber-reinforced plastic molded article was obtained through the below-described steps (D) to (F). The properties of the thus obtained prepreg and fiber-reinforced plastic molded article are shown in Table 1. Even when the resin used in Example 2 was changed to a thermosetting resin, a particularly high impact strength was obtained as well as Example 2.

(D) The prepreg was arranged in a cavity of a compression molding die that had been preheated to 60°C, and a pressure of 5 MPa was applied and maintained for 5 minutes, after which the die was opened, and a metal spacer was inserted to an end of the die to adjust the thickness of the resulting fiber-reinforced plastic molded article to be 4.0 mm.

(E) The cavity of the die was fastened again and, with the pressure being maintained, the die was heated to 150°C to perform 90-minutes curing.

(F) The die was opened, and the resulting fiber-reinforced plastic molded article was taken out.

(Example 5)

A prepreg and a fiber-reinforced plastic molded article were obtained through the same steps as in Example 1, except that the fiber mat 1 was changed to the fiber mat 10. The properties of the thus obtained prepreg and fiber-reinforced plastic molded article are shown in Table 1. A higher impact strength was obtained as compared to Comparative Example 1. Comparing Example 2 and Example 5, a particularly high impact strength was obtained in Example 2 by using organic fibers (B) having a larger diameter.

(Example 6)

A prepreg and a fiber-reinforced plastic molded article were obtained through the same steps as in Example 1, except that the fiber mat 1 was changed to the fiber mat 11. The properties of the thus obtained prepreg and fiber-reinforced plastic molded article are shown in Table 1. A higher impact strength was obtained as compared to Comparative Example 1. Comparing Example 2 and Example 6, in Example 2, the fiber mat had a lower coefficient of variation of the area weight, and a particularly high impact strength was obtained.

(Example 7)

A prepreg and a fiber-reinforced plastic molded article were obtained through the same steps as in Example 1, except that the fiber mat 1 was changed to the fiber mat 12. The properties of the thus obtained prepreg and fiber-reinforced plastic molded article are shown in Table 1. A higher impact strength was obtained as compared to Comparative Example 1. Comparing Example 2 and Example 7, in Example 2, the content ratio of the organic fibers (B) was higher, and a particularly high impact strength was obtained.

(Example 8)

A prepreg and a fiber-reinforced plastic molded article were obtained through the same steps as in Example 1, except that the fiber mat 1 was changed to the fiber mat 13. The properties of the thus obtained prepreg and fiber-reinforced plastic molded article are shown in Table 1. Comparing Example 2 and Example 8, in Example 8, the content ratio of the organic fibers (B) was higher, and a particularly high impact strength was obtained.

(Example 9)

A prepreg and a fiber-reinforced plastic molded article were obtained through the same steps as in Example 1, except that the fiber mat 1 was changed to the fiber mat 14. The properties of the thus obtained prepreg and fiber-reinforced plastic molded article are shown in Table 1. However, in Example 9, since the content ratio of the organic fibers (B) was high and the fiber-reinforced plastic molded article did not expand to a thickness of 4 mm with good quality, the impact strength of the fiber-reinforced plastic molded article was not evaluated.

(Example 10)

A prepreg and a fiber-reinforced plastic molded article were obtained through the same steps as in Example 1, except that the fiber mat 1 was changed to the fiber mat 15. The properties of the thus obtained prepreg and fiber-reinforced plastic molded article are shown in Table 1. However, in Example 10, since the content ratio of the organic fibers (B) was high and the fiber-reinforced plastic molded article did not expand to a thickness of 4 mm with good quality, the impact strength of the fiber-reinforced plastic molded article was not evaluated.

(Example 11)

A prepreg and a fiber-reinforced plastic molded article were obtained through the same steps as in Example 1, except that the fiber mat 1 was changed to the fiber mat 6. The properties of the thus obtained prepreg and fiber-reinforced plastic molded article are shown in Table 2. A higher impact strength was obtained as compared to Comparative Example 1. Comparing Example 2 and Example 11, in Example 2, the carbon fibers (A) had a longer average fiber length, and particularly high flexural modulus and flexural strength were obtained.

(Example 12)

A prepreg and a fiber-reinforced plastic molded article were obtained through the same steps as in Example 1, except that the fiber mat 1 was changed to the fiber mat 7. The properties of the thus obtained prepreg and fiber-reinforced plastic molded article are shown in Table 2. A higher impact strength was obtained as compared to Comparative Example 1. Comparing Example 2 and Example 12, in Example 2, the carbon fibers (A) had a shorter average fiber length, and particularly high flexural modulus and flexural strength were obtained.

(Example 13)

A prepreg and a fiber-reinforced plastic molded article were obtained through the same steps as in Example 1, except that the fiber mat 1 was changed to the fiber mat 8. The properties of the thus obtained prepreg and fiber-reinforced plastic molded article are shown in Table 2. A higher impact strength was obtained as compared to Comparative Example 1. Comparing Example 2 and Example 13, in Example 2, the organic fibers (B) had a longer average fiber length, and a particularly high impact strength was obtained.

(Example 14)

A prepreg and a fiber-reinforced plastic molded article were obtained through the same steps as in Example 1, except that the fiber mat 1 was changed to the fiber mat 9. The properties of the thus obtained prepreg and fiber-reinforced plastic molded article are shown in Table 2. A higher impact strength was obtained as compared to Comparative Example 1. Comparing Example 2 and Example 14, in Example 2, the organic fibers (B) had a shorter average fiber length, and a particularly high impact strength was obtained.

(Example 15)

A prepreg and a fiber-reinforced plastic molded article were obtained through the same steps as in Example 1, except that the fiber mat 1 was changed to the fiber mat 3. The properties of the thus obtained prepreg and fiber-reinforced plastic molded article are shown in Table 2. A higher impact strength was obtained as compared to Comparative Example 1. Comparing Example 1 and Example 15, in Example 1, the organic fibers (B) had a larger diameter and a higher tensile strength, and a particularly high impact strength was obtained.

(Example 16)

A prepreg and a fiber-reinforced plastic molded article were obtained through the same steps as in Example 1, except that the fiber mat 1 was changed to the fiber mat 4. The properties of the thus obtained prepreg and fiber-reinforced plastic molded article are shown in Table 2. A higher impact strength was obtained as compared to Comparative Example 1. Comparing Example 1 and Example 16, in Example 1, the organic fibers (B) had a larger diameter and a higher tensile strength, and a particularly high impact strength was obtained.

(Example 17)

A prepreg and a fiber-reinforced plastic molded article were obtained through the same steps as in Example 1, except that the fiber mat 1 was changed to the fiber mat 5. The properties of the thus obtained prepreg and fiber-reinforced plastic molded article are shown in Table 2. A higher impact strength was obtained as compared to Comparative Example 1. Comparing Example 16 and Example 17, in Example 17, the organic fibers (B) had a larger diameter, and a particularly high impact strength was obtained.

(Comparative Example 1)

A prepreg and a fiber-reinforced plastic molded article were obtained through the same steps as in Example 1, except that a laminate in which the fiber mat 17 and the resin sheet 2 were arranged in the order of [resin sheet 2/fiber mat 3/resin sheet 2/fiber mat 3/resin sheet 2/fiber mat 3/resin sheet 2/fiber mat 3/resin sheet 2] was produced. The properties of the thus obtained prepreg and fiber-reinforced plastic molded article are shown in Table 2.

(Comparative Example 2)

A prepreg and a fiber-reinforced plastic molded article were obtained through the same steps as in Example 1, except that the fiber mat 1 was changed to the fiber mat 18. The properties of the thus obtained prepreg and fiber-reinforced plastic molded article are shown in Table 2.

(Comparative Example 3)

A prepreg and a fiber-reinforced plastic molded article were obtained through the same steps as in Example 1, except that the fiber mat 1 was changed to the fiber mat 16. The properties of the thus obtained prepreg and fiber-reinforced plastic molded article are shown in Table 2. However, in Comparative Example 3, since the fiber-reinforced plastic molded article did not expand to a thickness of 4 mm with good quality, the impact strength of the fiber-reinforced plastic molded article was not evaluated.

(Comparative Example 4)

A prepreg and a fiber-reinforced plastic molded article were obtained through the same steps as in Example 3, except that the fiber mat 2 was changed to the fiber mat 1. The properties of the thus obtained prepreg and fiber-reinforced plastic molded article are shown in Table 2.

[Table 1]

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Prepreg Composition | Carbon Fiber (A) | - | CF | CF | CF | CF | CF | CF | CF | CF | CF | CF |
| | Organic Fiber (B) | - | PET1 | LCP | LCP | LCP | Aramid | LCP | LCP | LCP | LCP | LCP |
| | Resin | - | PP | PP | PEKK | EP | PP | PP | PP | PP | PP | PP |
| | Carbon Fiber (A) Content | Weight% | 72 | 72 | 72 | 72 | 72 | 72 | 84 | 63 | 56 | 51 |
| | Organic Fiber (B) Content | Weight% | 28 | 28 | 28 | 28 | 28 | 28 | 16 | 37 | 44 | 49 |
| | Resin Content | Weight% | 64 | 64 | 72 | 79 | 64 | 64 | 64 | 64 | 64 | 64 |
| Carbon Fiber (A) | Average Fiber Length | mm | 6 | 6 | 6 | 6 | 6 | 6 | 6 | 6 | 6 | 6 |
| OrganicFiber (B) | Average Fiber Length | mm | 13 | 13 | 13 | 13 | 13 | 13 | 13 | 13 | 13 | 13 |
| | Diameter | μm | 23 | 23 | 23 | 23 | 12 | 23 | 23 | 23 | 23 | 23 |
| | Tensile Strength | GPa | 1.1 | 3.3 | 3.3 | 3.3 | 2.9 | 3.3 | 3.3 | 3.3 | 3.3 | 3.3 |
| | Tensile Elongation at Break | % | 14 | 2.8 | 2.8 | 2.8 | 3.6 | 2.8 | 2.8 | 2.8 | 2.8 | 2.8 |
| | (Tmb-Tmc) or (Tmb-Tmd) | °C | 95 | 165 | 25 | 165 | Note 1) | 165 | 165 | 165 | 165 | 165 |

(continued)

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Prepreg Properties | Average Expansion Rate in Out-of-Plain Direction | % | 650 | 650 | 650 | 650 | 650 | 650 | 650 | 600 | 300 | 230 |
| | Weight of Fiber Sheet Substrate (web) | g/m$^2$ | 100 | 100 | 100 | 100 | 100 | 100 | 100 | 100 | 100 | 100 |
| | CV (Coefficient of Variation) of Area Weight of Fiber Sheet Substrate (web) | % | 3 | 3 | 3 | 3 | 3 | 12 | 3 | 3 | 3 | 3 |
| | Density ρ | g/cm$^3$ | 1.08 | 1.08 | 1.36 | 1.8 | 108 | 1.08 | 108 | 108 | 108 | 108 |
| | Flexural Modulus | GPa | 13 | 13 | 18 | 14 | 13 | 12 | 13 | 13 | 12 | 11 |
| | Flexural Strength | MPa | 210 | 209 | 280 | 213 | 209 | 181 | 209 | 205 | 202 | 197 |
| Molded Article Property | Charpy Impact Strength | kJ/m$^2$ | 15 | 35 | 38 | 36 | 19 | 11 | 20 | 40 | _Note 2) | _Note 2) |

Note 1) Organic Fiber (B) does not have melting point. Note 2) No Evaluation.

[Table 2]

| | | Unit | Example 11 | Example 12 | Example 13 | Example 14 | Example 15 | Example 16 | Example 17 | Comparative Example 1 | Comparative Example 2 | Comparative Example 3 | Comparative Example 4 |
|---|---|---|---|---|---|---|---|---|---|---|---|---|---|
| Prepreg Composition | Carbon Fiber (A) | – | CF | CF | CF | CF | CF | CF | CF | CF | CF | CF | CF |
| | Organic Fiber (B) | – | LCP | LCP | LCP | LCP | PET 2 | PET 3 | PET 4 | _Note 3) | _Note 3) | LCP | PET 1 |
| | Resin | _ | PP | PP | PP | PP | PP | PP | PP | PP | PP | PP | PEKK |
| | Carbon Fiber (A) Content | Weight% | 72 | 72 | 72 | 72 | 72 | 72 | 72 | 100 | 100 | 39 | 72 |
| | Organic Fiber (B) Content | Weight% | 28 | 28 | 28 | 28 | 28 | 28 | 28 | 0 | 0 | 61 | 28 |
| | Resin Content | Weight% | 64 | 64 | 64 | 64 | 64 | 64 | 64 | 74 | 63 | 64 | 67 |
| Carbon Fiber (A) | Average Fiber Length | mm | 0.5 | 20 | 6 | 6 | 6 | 6 | 6 | 6 | 6 | 6 | 6 |
| Organic Fiber (B) | Average Fiber Length | mm | 13 | 13 | 2 | 30 | 13 | 13 | 13 | _Note 3) | _Note 3) | 13 | 13 |
| | Diameter | μm | 23 | 23 | 23 | 23 | I | 10 | 18 | _Note 3) | _Note 3) | 23 | 23 |
| | Tensile Strength | GPa | 3.3 | 3.3 | 3.3 | 3.3 | 0.5 | 0.5 | 0.5 | _Note 3) | _Note 3) | 3.3 | 3.3 |
| | Tensile Elongation at Break | % | 2.8 | 2.8 | 2.8 | 2.8 | 46 | 42 | 36.5 | _Note 3) | _Note 3) | 2.8 | 2.8 |
| | (Tmb-Tmc) or (Tmb-Tmd) | °C | 165 | 165 | 165 | 165 | 95 | 95 | 95 | _Note 3) | _Note 3) | 165 | -45 |

EP 4 442 743 A1

(continued)

| | | Unit | Example 11 | Example 12 | Example 13 | Example 14 | Example 15 | Example 16 | Example 17 | Comparative Example 1 | Comparative Example 2 | Comparative Example 3 | Comparative Example 4 |
|---|---|---|---|---|---|---|---|---|---|---|---|---|---|
| Prepreg Properties | Average Expansion Rate in Out-of-Plain Direction | % | 650 | 650 | 650 | 650 | 650 | 650 | 650 | 650 | 650 | 200 | 650 |
| | Weight of Fiber Sheet Substrate (web) | g/m2 | 100 | 100 | 100 | 100 | 100 | 100 | 100 | 90 | 110 | 100 | 100 |
| | CV (Coefficient of Variation) of Area Weight of Fiber Sheet Substrate (web) | % | 3 | 5 | 3 | 3 | 3 | 3 | 3 | 3 | 3 | 3 | 3 |
| | Density $\rho$ | g/cm³ | 1.08 | 1.08 | 1.08 | 1.08 | 1.08 | 1.08 | 1.08 | 1.04 | 1.11 | 1.08 | 1.36 |
| | Flexural Modulus | GPa | 4 | 10 | 13 | 12 | 13 | 13 | 13 | 12 | 13 | 8 | 11 |
| | Flexural Strength | MPa | 66 | 180 | 208 | 193 | 208 | 210 | 209 | 209 | 215 | 150 | 272 |
| Molded Article Property | Charpy Impact Strength | kJ/m2 | 20 | 30 | 13 | 22 | 9 | 9 | 11 | 7 | 9 | _Note 4) | 11 |

Note 3) Organic Fiber (B) is not included . Note 4) No evaluation.

Description of Symbols

1: prepreg
2: carbon fiber (A)
3: organic fiber (B)
4: resin
5: void
6: fiber-reinforced plastic molded article

## Claims

1. A prepreg, in which 5 to 65 parts by weight of a fiber sheet substrate is impregnated with 35 to 95 parts by weight of a resin, the fiber sheet substrate comprising more than 50% by weight but 99% by weight or less of discontinuous carbon fibers (A) and 1% by weight or more but less than 50% by weight of discontinuous organic fibers (B) that are uniformly dispersed,
   wherein the prepreg satisfies any one of the following Conditions 1 to 3:

   Condition 1: the resin is a thermoplastic resin (C), and a difference between a melting point Tmb (°C) of the organic fibers (B) and a melting point Tmc (°C) of the thermoplastic resin (C) (Tmb - Tmc) is 20 to 200°C;
   Condition 2: the resin is a thermosetting resin (D), and a difference between the melting point Tmb (°C) of the organic fibers (B) and a curing temperature Tmd (°C) of the thermosetting resin (D) (Tmb - Tmd) is 20 to 400°C; and
   Condition 3: the organic fibers (B) have no melting point.

2. The prepreg according to claim 1, which expands at an average expansion ratio of 250 to 800% in an out-of-plane direction when the resin is softened.

3. The prepreg according to claim 1, wherein the fiber sheet substrate has an area weight of 10 to 200 g/m$^2$.

4. The prepreg according to claim 3, wherein a coefficient of variation (CV) of the area weight is 0.1 to 10%.

5. The prepreg according to claim 1, wherein the fiber sheet substrate further comprises 0.1 to 10% by weight of a binder resin (E).

6. The prepreg according to claim 1, wherein the fiber sheet substrate is a paper-made substrate.

7. The prepreg according to claim 1, wherein, in the fiber sheet substrate, a content ratio of the discontinuous carbon fibers (A) is 60 to 80% by weight, and a content ratio of the discontinuous organic fibers (B) is 20 to 40% by weight.

8. The prepreg according to claim 1, wherein the carbon fibers (A) have an average fiber length of 1 to 15 mm.

9. The prepreg according to claim 1, wherein the organic fibers (B) have an average fiber length of 4 to 20 mm.

10. The prepreg according to claim 1, wherein the organic fibers (B) are fibers formed of a resin selected from polyester resins, polyaryl ether ketone resins, aromatic polyamide resins, and polyarylene sulfide resins.

11. The prepreg according to claim 1, wherein the organic fibers (B) have a diameter of 15 to 50 μm.

12. The prepreg according to claim 1, wherein the organic fibers (B) have a tensile strength of 1 to 6 GPa.

13. The prepreg according to claim 1, wherein the organic fibers (B) have a tensile elongation at break of 2.5 to 100%.

14. The prepreg according to claim 1, wherein, in Condition 1, the difference between the melting point Tmb (°C) of the organic fibers (B) and the melting point Tmc (°C) of the thermoplastic resin (C) (Tmb - Tmc) is 50 to 160°C.

**15.** The prepreg according to claim 1, wherein, in Condition 1, the thermoplastic resin (C) is selected from polyolefin resins, polyamide resins, and polyarylene sulfide resins.

**16.** The prepreg according to claim 1, having a resin impregnation rate of 80 to 100%.

**17.** The prepreg according to claim 1, wherein a ratio between a maximum value $\sigma_{Max}$ and a minimum value $\sigma_{Min}$ of the tensile strength of the prepreg ($\sigma_{Max}$/minimum value $\sigma_{Min}$) is 1 to 2.

**18.** A preform, obtained by laminating at least one prepreg according to claim 1.

**19.** A fiber-reinforced plastic molded article, obtained by molding the preform according to claim 18.

[Fig. 1]

[Fig. 2]

## INTERNATIONAL SEARCH REPORT

| | International application No. |
|---|---|
| | **PCT/JP2022/043166** |

**A. CLASSIFICATION OF SUBJECT MATTER**

*C08J 5/24*(2006.01)i
FI: C08J5/24

According to International Patent Classification (IPC) or to both national classification and IPC

**B. FIELDS SEARCHED**

Minimum documentation searched (classification system followed by classification symbols)

B29B11/16;15/08-15/14; C08J5/04-5/10;5/24; B29C70/00-70/88

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-158912 A (MITSUBISHI PAPER MILLS LTD) 01 October 2020 (2020-10-01) claims, paragraphs [0003], [0010]-[0013], [0015], [0018]-[0022], [0027], examples | 1-13, 16-19 |
| A | | 14, 15 |
| X | JP 2013-209758 A (MITSUBISHI RAYON CO LTD) 10 October 2013 (2013-10-10) claims, paragraphs [0007], [0009], [0011], [0013], [0015], examples | 1-19 |
| X | WO 2014/021366 A1 (AWA PAPER MFG. CO., LTD.) 06 February 2014 (2014-02-06) claims, paragraphs [0050]-[0052], [0054], examples | 1, 3, 6-8, 10, 16-19 |
| A | | 2, 4, 5, 9, 11-15 |
| A | JP 2013-56985 A (AWA PAPER MFG CO LTD) 28 March 2013 (2013-03-28) entire text | 1-19 |
| A | JP 51-126260 A (MITSUBISHI RAYON CO LTD) 04 November 1976 (1976-11-04) entire text | 1-19 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **07 February 2023** | **21 February 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/043166**

| Patent document cited in search report | | | Publication date (day/month/year) | Patent family member(s) | Publication date (day/month/year) |
|---|---|---|---|---|---|
| JP | 2020-158912 | A | 01 October 2020 | (Family: none) | |
| JP | 2013-209758 | A | 10 October 2013 | (Family: none) | |
| WO | 2014/021366 | A1 | 06 February 2014 | (Family: none) | |
| JP | 2013-56985 | A | 28 March 2013 | (Family: none) | |
| JP | 51-126260 | A | 04 November 1976 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014004775 A

- WO 2017110528 A